**Europäisches Patentamt**

(19) **European Patent Office**

**Office européen des brevets**

(11) Veröffentlichungsnummer: **0 117 381**

**B1**

(12) # EUROPÄISCHE PATENTSCHRIFT

(45) Veröffentlichungstag der Patentschrift:
04.11.87

(51) Int. Cl.⁴: **F 16 L 41/08,** F 16 L 23/00,
F 16 J 15/02

(21) Anmeldenummer: **83850047.8**

(22) Anmeldetag: **25.02.83**

(54) **Rohranschluss mit Dichtungsring für hygienische Zwecke.**

(43) Veröffentlichungstag der Anmeldung:
05.09.84 Patentblatt 84/36

(45) Bekanntmachung des Hinweises auf die Patenterteilung:
04.11.87 Patentblatt 87/45

(84) Benannte Vertragsstaaten:
BE DE FR GB NL

(56) Entgegenhaltungen:
FR-A-1 144 387
US-A-3 262 722

K. TRUTNOVSKY: "Berührungsdichtungen", 2.
Auflage, 1975, Seiten 124-131, Springer-Verlag,
Berlin, DE.

(73) Patentinhaber: **A.G. Johansons Metallfabrik
Aktiebolag, Västeraasvägen 6, S-730 40 Kolbäck
(SE)**

(72) Erfinder: **Olenfalk, Lars, Planetvägen 3, S-175 60
Järfälla (SE)**
Erfinder: **Delbou, Tor, Tegelhagsvägen 15, S-191 39
Sollentuna (SE)**

(74) Vertreter: **Stürmer, Gerhard, AWAPATENT AB Box
7402, S-103 91 Stockholm (SE)**

## Beschreibung

Die Erfindung bezieht sich auf einen Rohranschluss nach dem Oberbegriff des Patentanspruches 1. Ein solcher Rohranschluss ist aus K. Trutnovsky: "Berührungsdichtungen", 2. Auflage, 1975, Seite 130 und Fig. 11g und h, Springer Verlag, Berlin, DE, bekannt.

Beim Anziehen von Rohranschlüssen, die aus zwei zusammenschraubbaren Teilen und einem dazwischen liegenden Dichtungsring bestehen, ergibt sich das Problem, dass sich der Dichtungsring leicht verschiebt. Ein insbesondere in der Lebensmittelindustrie ernstes Problem ist, dass verschobene Dichtungen Ritzen und verborgene Winkel und Ablagerungen in diesen verursachen können, die zu Säuberungsproblemen und Bakterienzuwachs führen können.

Hier greift die Erfindung ein, die zur Aufgabe hat, diese Nachteile zu vermeiden, d.h. Säuberungsprobleme und Bildung von Ritzen, Winkeln u.dgl. bei Rohranschlüssen der einleitend erwähnten Art.

Diese Probleme werden erfindungsgemäss durch die im kennzeichnenden Teil des Patentanspruches 1 angegebene Erfindung gelöst. Weitere Kennzeichen der Erfindung sowie zweckmässige Weiterentwicklungen und Ausführungsformen gehen aus den Unteransprüchen hervor.

Die Erfindung sei nun in Kürze anhand beiliegender Zeichnungen beschrieben. Dabei zeigt

Fig. 1 ein Ausführungsbeispiel der Verwirklichung des Erfindungsgedankens beim Anschliessen eines Rohrstutzens an eine Behälterwand,

Fig. 2 eine Abwandlung mit breiterem Anschlagflansch zum Anziehen mit Hilfe von Schrauben,

Fig. 3 eine Abwandlung mit zusätzlichem Spannring und losen Schrauben zum Anziehen,

Fig. 4 eine Ausführung nach Fig. 3, jedoch mit Z-Übergang mit ca. 90° Winkel,

Fig. 5 eine Ausführungsform nach Fig. 3, wobei der Anschlagflansch in die Behälterwand versenkt ist und

Fig. 6 eine Abwandlung zur Verbindung von zwei Rohrenden.

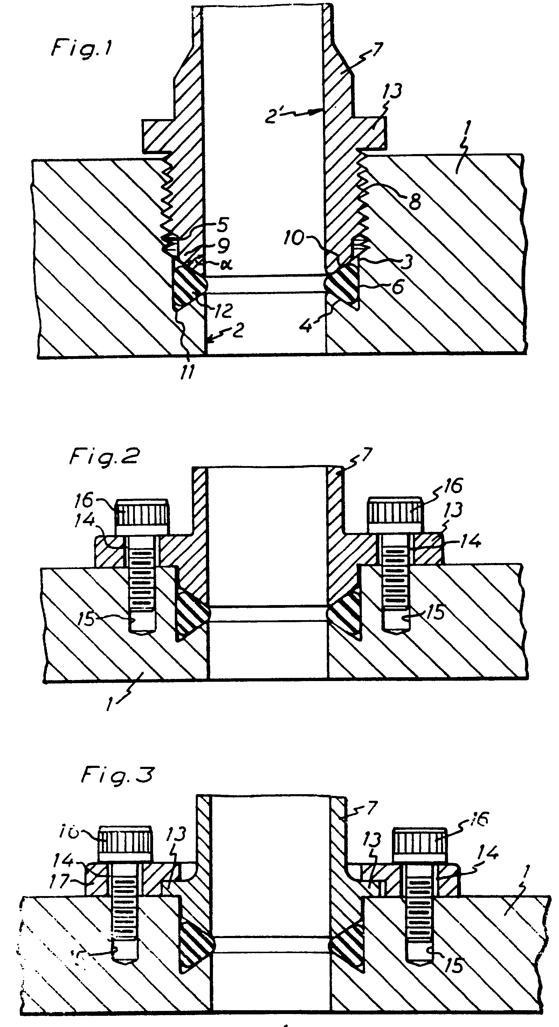

In der in Fig. 1 mit 1 bezeichneten Behälterwand wird zunächst eine durchgehende Bohrung 2 mit für den vorgesehenen Zweck geeignetem Radius angebracht und anschließend koaxial hierzu, von der Anschlußseite her, durch etwa die halbe Behälterwand 1 eine zweite Bohrung 3 mit etwas größerem Radius. Zwischen den Bohrungen 2 und 3 wird anschließend auf geeignete Weise ein im Querschnitt Z-ähnlicher Übergang vom kleineren zum größeren Radius angebracht. Schließlich wird von außen ein Innengewinde 5 in einem Teil der größeren Bohrung angebracht, wobei eine zylindrische Zone 6 im Bereich des Z-Überganges 4 verbleibt. Zum Einschrauben in diese Öffnung in der Behälterwand kann ein Rohranschlußteil 7 erfindungsgemäß bei der in Fig. 1 dargestellten Ausführungsform folgende Ausbildung bekommen.

Der Rohranschlußteil 7 hat dieselbe lichte Weite, wie die obengenannte erste Bohrung 2, und ist an seinem mit der Behälterwand 1 verbindbaren Ende mit einem Außengewinde 8 versehen, das mit dem obengenannten Innengewinde 5 in Eingriff gebracht werden kann. Das Außengewinde 8 ist ganz vorn so abgedreht, daß man an der Stirnseite des Rohranschlusses 7 ein Hülsenähnliches zylindrisches Ende 9 erhält, dessen Außendurchmesser nahezu dem Durchmesser der zweiten Bohrung 3 entspricht oder unbedeutend kleiner ist, so daß das Hülsenende 9 in der Bohrung 3 Platz findet. Weiterhin ist die Stirnseite 10 des Hülsenendes 9 vorzugsweise im selben Winkel abgeschrägt, wie der Mittelschenkel des Z-formigen Überganges 4, jedoch spiegelbildlich. Der Winkel zwischen dem Mittelschenkel des Z-Überganges 4 und der abgeschrägten Stirnseite 10 beträgt vorzugsweise 40° oder mehr, bis zu einer oberen Grenze von etwa 120°.

Auf diese Weise bildet sich zwischen dem Mittelschenkel des Z-Überganges 4, dem zylindrischen Bereich 6 und der abgeschrägten Stirnseite 10 ein freier Zwischenraum 11 zur Einlage eines Dichtungsrings 12, der aus einigermaßen elastischem oder plastisch verformbarem Material bestehen sollte, z. B. aus synthetischem Kautschuk. Beispielsweise kann mit Vorteil ein sogenannter O-Ring verwendet werden. Ein solcher O-Ring hat zweckmäßigerweise einen Querschnittsdurchmesser der in angemessenem Verhältnis zum Unterschied zwischen den Radien der Bohrungen 2 und 3 steht, und dessen Außendurchmesser ungefähr dem Durchmesser der größeren Bohrung 3 entspricht oder unbedeutend größer ist.

Nach Einlegen des Dichtungsringes 12 in die Bohrung 3 und Einschrauben des Rohranschlußteils 7 in dieselbe, wird der Dichtungsring 12 durch die schräge Stirnseite 10 des Rohranschlußteils 7 gegen den Mittelschenkel des Z-ähnlichen Übergangs 4 verschoben. Beim weiteren Einschrauben wird der Dichtungsring 12 elastisch oder plastisch von seiner ursprünglich runden zu einer immer mehr dreieckähnlichen Querschnittsform deformiert und dichtet schließlich sehr wirkungsvoll zwischen dem genannten Mittelschenkel und den beiden schrägen Stirnseiten 10. Dabei kann der Dichtungsring auch ein wenig in den durch die Bohrung 2 und den inneren Kanal 2' des Rohranschlusses 7 bildeten Durchflußkanal ausbuchten. Der Rohranschlußteil 7 kann zweckmäßigerweise einen Anschlagflansch 13 aufweisen, der verhindert, daß der Rohranschlußteil 7 zu weit in die Behälterwand 1 eingeschraubt werden kann, so daß die einander zugewandten Enden der Dichtungsflächen 4 und

---

10 in Berührung miteinander kommen und eventuell beschädigt werden können.

Der Anschlagflansch 13 nach Fig.2 kann auch etwas breiter gemacht und mit durchgehenden Bohrungen 14 versehen werden, wobei gleichzeitig in der Behälterwand 1 mit Gewinde versehene Sacklöcher 15 für Schraubbolzen 16 zum Zusammenschrauben der Rohranschlußteile 7 und 1 angebracht werden. In diesem Fall sind Innengewinde 5 und Außengewinde 8 hinfällig.

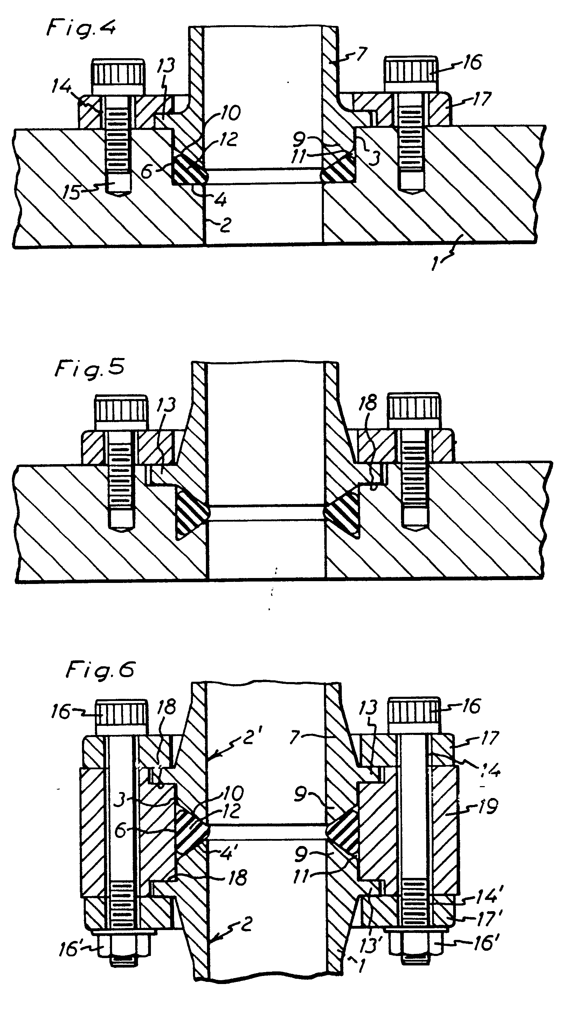

Bei der Ausführung nach Fig. 3 hat der Anschlagflansch 13 dieselbe Breite wie nach Fig. 1. Auch hier fehlen Innen- und Außengewinde 5, 8. Statt dessen erfolgt das Verschrauben mit Hilfe eines losen Flanschringes 17 auf die im Anschluß an Fig. 2 beschriebene Art und Weise. Bei der Abwandlung nach Fig. 4 steht der Mittelschenkel des Z-Übergangs 4 senkrecht zur Längsachse der Bohrung 2, was einfach herzustellen ist. Nach Fig. 5 ist der Anschalgflansch 13 in eine Nut 18 in der Behälterwand 1 versenkt.

Fig. 6 zeigt die Verwirklichung des Erfindungsgedankens beim Verbinden von zwei Rohranschlußenden 1 und 7 jeweils mit einem Flansch 13, 13', Schrauben 16 mit Muttern 16' und einem muffenähnlichen Zwischenstück 19, dessen Innenseite den zylindrischen Bereich 6 der Böhrung 3 bildet. Der freie Zwischenraum 11 zur Aufnahme des Dichtungsrings wird hierbei zwischen der nach unten gewendeten, abgeschrägten Stirnseite 10 des oberen Rohranschlußteils 7, dem zylindrischen Bereich 6 und der hier dem Mittelschenkel des Z-Übergangs entsprechenden abgeschrägten Stirnseite 4' des unteren (die Behälterwand 1 in den übrigen Figuren ersetzenden) Rohranschlußteils 1 gebildet.

Da beim Festschrauben des Rohranschlußteils 7 der Zwischenraum 11 praktisch ganz durch den zusammengepressten Dichtungsring 12 ausgefüllt wird, liegen keinerlei Ritzen oder Winkel vor, in denen z. B. Milch oder anderer Lebensmittelreste oder bei medizinischer Verwendung biologische Flüssigkeiten o.dgl. festgehalten werden könnten und Bakterienzuwachs oder schwierigere Säuberung mit dadurch verursachter Kontaminationsgefahr hervorrufen.

Die Ausgestaltung des Rohranschlusses 7 im übrigen, d.h. der bei den beschriebenen Ausführungsbeispielen oberhalb der Behälterwand 1 liegende Teil, ist an sich aus dem Gesichtspunkt der vorliegenden Erfindung weniger interessant und kann somit entsprechend vorliegenden Wünschen oder Forderungen ausgestaltet werden.

Die Verwirklichung der Erfindung ist nicht auf Rohranschlüsse an Behälterwänden begrenzt, sondern kann auch in anderen Zusammenhängen zum Einsatz gebracht werden, z. B. beim Anschluß kleiner Rohre an große Rohre mit beispielsweise senkrecht aufeinander stehenden Rohrachsen, bei der Befestigung von Flanschanschlüssen und überhaupt bei vielen ausaneinernehmbaren Anschlüssen im Lebensmittelsektor und auf dem Gebiet der Medizin und Chirurgie.

**Patentansprüche**

1. Rohranschluss für hygienische Zwecke, bestehend aus zwei verschraubbaren Teilen (1, 7) mit dazwischen liegendem Dichtungsring (12) aus plastisch oder elastisch verformbarem Material, vorzugsweise einem sog. O-Ring aus synthetischem Kautschuk, wobei der eine Teil (1) eine durchgehende Bohrung (2) mit einem aufgebohrten Teil (3) o.dgl. (19) mit grösserem Innendurchmesser und einem dazwischen liegenden zylindrischen Bereich (6) hat, während der andere Teil (7) des Rohranschlusses eine abgeschrägte Stirnseite (10) an seinem dem erstgenannten Teil (1) zugewandten (9) Ende aufweist, dadurch gekennzeichnet, dass im Anschluss an den zylindrischen Bereich (6) ein Z-förmiger Übergang (4) oder eine entsprechende Anordnung mit schräger Stirnseite (4') vorgesehen ist und dass der Mittelschenkel des Z-Übergangs (4) bzw. der entsprechenden Anordnung (4') und die abgeschrägte Stirnseite (10) des anderen Teils (7) entgegengesetzt abgeschrägt sind, wobei zwischen dem Mittelschenkel des Z-förmigen Übergangs (4) bzw. der entsprechenden Anordnung (4'), dem zylindrischen Bereich (6) und der abgeschrägten Stirnseite (10) ein dreiecknutähnlicher Zwischenraum (11) zur Aufnahme des Dichtungsrings (12) gebildet wird, der beim Verschrauben der beiden Teile (1, 7) praktisch völlig vom Dichtungsring (12) ausgefüllt wird, wobei dieser auch etwas in die Bohrung (2) ausbuchten kann.

2. Rohranschluss nach Anspruch 1, dadurch gekennzeichnet, dass der Querschnittsdurchmesser des Dichtungsrings (12) etwa dem Unterschied zwischen den Radien der durchgehenden Bohrung (2) und deren aufgebohrtem Teil (3) entspricht, während dessen Aussendurchmesser hauptsächlich der lichten Weite des aufgebohrten Teils (3) entspricht.

3. Rohranschluß nach Anspruch 1, dadurch gekennzeichnet, daß der Winkel zwischen dem Mittelschenkel des Z-förmigen Übergangs (4) und der abgeschrägten Stirnseite (10) des anderen Teils (7) 40° oder größer ist, bis zu ca. 120°.

4. Rohranschluß nach Anspruch 1, 2 oder 3, dadurch gekennzeichnet, daß der andere Teil (7) einen Anschlagflansch (13) aufweist, der durch Anlage gegen eine Anlagefläche (1, 18) o.dgl. verhindert, daß die schräge Stirnseite (10) gegen den Mittelschenkel des Z-förmigen Übergangs (4) beim Verschrauben des einen Teils (1) mit dem anderen Teil (2) stößt.

5. Rohranschluß nach Anspruch 4, dadurch gekennzeichnet, daß der Anschlagflansch (13) mit einer Reihe von durchgehenden Bohrungen (14) für in mit Gewinde versehene Sacklöcher (15) im einen Teil (1) einschraubbare Schraubbolzen (16) zum Verschrauben der beiden Teile (1, 7) des Rohranschlusses versehen ist.

6. Rohranschluß nach Anspruch 4, dadurch gekennzeichnet, daß zum Festschrauben des anderen Teils (7) ein loser Flanschring (17) mit durchgehenden Bohrungen (14) für in mit Gewinde versehene Sacklöcher (15) im ersten Teil (1) einschraubbare Schraubbolzen (16) vorgesehen ist.

7. Rohranschluß nach einem oder mehrerem der Ansprüche 1 bis 4, dadurch gekennzeichnet, daß der aufgebohrte Teil (3) der durchgehenden Bohrung (2) mit einem Innengewinde (5) versehen ist, und daß der andere Teil (7) ein zu diesem Innengewinde (5) passendes Außengewinde (8) aufweist.

8. Rohranschluß nach einem oder mehreren der Ansprüche 1 bis 4, dadurch gekennzeichnet, daß der erste Teil (Fig. 6) zusammengesetzt ist aus teils einem dem andreren Teil (7) hauptsächlich entsprechend ausgeführten Teil (1) und teils einem ringförmigen Teil (19), dessen Innenseite den zylindrischen Bereich (6) bildet.

**Claims**

1. A pipe joint for hygienic use, comprising two screwable members (1, 7) with an intermediary sealing ring (12) of a plastically or elastically deformable material, preferably a so-called 0-ring of synthetic rubber, one member (1) having a through bore (2) with a bored portion (3) or the like (19) which has a larger inner diameter and an intermediary cylindrical area (6), while the other member (7) of the pipe joint has a bevelled front face (10) at its end (9) facing the firstmentioned member (1), characterised in that a Z-shaped transition (4) or a corresponding configuration having an inclined front face (4') is arranged in connection with said cylindrical area (6), and that the intermediary leg of the Z-transition (4) or the corresponding configuration (4') and the bevelled front face (10) of the other member (7) are oppositely bevelled, a groove-shaped triangular space (11) being formed between the intermediary leg of the Z-shaped transition (4) or the corresponding configuration (4'), the cylindrical area (6) and the bevelled front face (10) to receive said sealing ring (12) and, when the two members (1, 7) are screwed together, being practically completely filled out by the sealing ring (12) which can also slightly bulge into said bore (2).

2. A pipe joint as claimed in claim 1, characterised in that the cross-sectional diameter of the sealing ring (12) corresponds approximately to the difference between the radii of said through bore (2) and the bored portion (3) thereof, the outer diameter thereof substantially corresponding to the inner width of the bored portion (3).

3. A pipe joint as claimed in claim 1, characterised in that the angle between the intermediary leg of the Z-shaped transition (4) and the bevelled front face (10) of the other member (7) is 40° or more, up to about 120°.

4. A pipe joint as claimed in claim 1, 2 or 3, characterised in that said other member (7) comprises a stop flange (13) which, by abutting contact surface (1, 18) or the like, prevents the bevelled front face (10) from striking the intermediary leg of the Z-shaped transition (4) when the two members (1, 2) are screwed together.

5. A pipe joint as claimed in claim 4, characterised in that said stop flange (13) is provided with a succession of through bores (14) for stud bolts (16) screwable into threaded blind holes (15) in said one member (1), for screwing together the two members (1, 7) of the pipe joint.

6. A pipe joint as claimed in claim 4, charaterised in that a loose flanged ring (17) is provided for screwing on said other member (7), said ring (17) having through bores (14) for stud bolts (16) screwable into threaded blind holes (15) in said first member (1).

7. A pipe joint as claimed in one or more of claims 1-4, characterised in that said bored portion (3) of said through bore (2) is provided with an internal thread (5), and that said other member (7) has an external thread (8) which fits said internal thread (5).

8. A pipe joint as claimed in one or more of claims 1-4, characterised in that said first member (Fig. 6) is composed on the one hand of a member (1) substantially corresponding to said other member (7) and, on the other hand, of an annular port (19) whose inside constitutes the cylindrical area (6).

**Revendications**

1. Raccord de tube pour applications hygiéniques, composé de deux parties ou demi-raccords (1, 7) pouvant être assemblés par vissage ou boulonnage, et d'une bague d'étanchéité interposée (12), faite d'une matière susceptible de déformation plastique ou élastique, de préférence, de ce qu'on appelle une bague torique en caoutchouc synthétique, l'une (1) des parties possédant un perçage traversant (2) comportant une partie contre-alésée (3) ou équivalent (19), de plus grand diamètre intérieur et une région cylindrique interposée (6), tandis que l'autre partie (7) du raccord de tube présente une face frontale chanfreinée (10) à son extrémité (9) qui est dirigée vers la partie (1) citée en premier, caractérisé en ce que, à la suite de la région cylindrique (6), est prévue un raccordement en Z (4), ou une formation correspondante présentant une face frontale oblique (4') et en ce que le segment central du raccordement en Z (4) ou la formation correspondante (4') et la face frontale chanfreinée (10) de ladite autre partie (7) sont chanfreinés avec des inclinaisons opposées cependant qu'entre le segment central du raccordement en Z (4) ou de la formation correspondante (4'), il se forme un espace intercalaire (11) analogue à une gorge triangulaire, destiné à recevoir la bague d'étanchéité (12) et qui, lors du vissage ou boulonnage des deux parties (1, 7), est pratiquement entièrement comblé par la bague d'étanchéité (12), celle-ci pouvant même faire légèrement saillie dans le perçage (2).

2. Raccord de tube selon la revendication 1, caractérisé en ce que le diamètre de la section de la bague d'étanchéité (12) correspond à peu près à la différence entre les rayons du perçage traversant (2) et de la partie contre-alésée (3) de ce perçage tandis que son diamètre extérieur correspond sensiblement à la largeur libre de la partie contre-alésée (3).

3. Raccord de tube selon la revendication 1, caractérisé en ce que l'angle entre le segment central du raccordement en Z (4) et la face frontale chanfreinée (10) de ladite autre partie (7) est de 40° ou plus, et peut atteindre environ 120°.

4. Raccord de tube selon l'une des revendications 1, 2 et 3, caractérisé en ce que ladite autre partie (7) présente une bride de butée (13) qui, en venant s'appuyer contre une surface de portée (1, 18) ou équivalent, empêche la face frontale oblique (10) de rencontrer le segment central du raccordement en Z (4) lorsqu'on assemble une partie (1) à l'autre partie (7) par vissage ou boulonnage.

5. Raccord de tube selon la revendication 4, caractérisé en ce que la bride de butée (13) est munie d'une série de perçages traversants (14) pour recevoir des vis (16) destinées à se visser dans des trous borgnes filetés (15) ménagés dans une partie (1), pour assembler les deux parties (1, 7) du raccord de tube par vissage ou boulonnage.

6. Raccord de tube selon la revendication 4, caractérisé en ce que, pour assembler ladite autre partie (7) par vissage ou boulonnage, il est prévu une couronne bride séparée (17) présentant des perçages traversants (14) pour recevoir des vis (16) destinées à se visser dans des trous borgnes filetés (15) ménagés dans la première partie (1).

7. Raccord de tube selon l'une ou plusieurs des revendications 1 à 4, caractérisé en ce que la partie contre-alésée (3) du perçage traversant (2) est munie d'un filetage intérieur (5) et en ce que ladite autre partie (7) présente un filetage extérieur (8) qui est complémentaire de ce filetage intérieur (5).

8. Raccord de tube selon l'une ou plusieurs des revendications 1 à 4, caractérisé en ce que la première partie (figure 6) est composée en partie, d'une partie (1) qui correspond essentiellement à ladite autre partie (7) et, en partie, d'une partie annulaire (19) dont la face interne forme la région cylindrique (6).

**0 117 381**

Fig.1

Fig.2

Fig.3

Fig.4

Fig.5

Fig.6